# EUROPEAN PATENT SPECIFICATION

(11) **EP 3 487 056 B1**
(45) Date of publication and mention of the grant of the patent: **20.01.2021**
(21) Application number: 18206395.8
(22) Date of filing: 15.11.2018
(51) Int. Cl.: H02M 3/158, H05B 33/08

(54) **COMBINED CURRENT, VOLTAGE AND ZERO CROSSING DETECTION WITH ZERO DRAIN IN STANDBY**
KOMBINIERTE STROM-, SPANNUNGS- UND NULLDURCHGANGSERKENNUNG MIT NULL-DRAIN IM STANDBY-MODUS
DÉTECTION COMBINÉE DE COURANT, DE TENSION ET DE PASSAGE PAR ZÉRO AVEC DRAIN ZÉRO EN ATTENTE

(30) Priority: 17.11.2017 GB 201719621
(43) Date of publication of application: 22.05.2019
(73) Proprietor: Tridonic GmbH & Co. KG, 6851 Dornbirn (AT)
(72) Inventor: Kelly, Jamie, Tyne & Wear, NE29 8AH (GB)
(74) Representative: Rupp, Christian

(56) References cited:
- CN-A- 103 597 723

## Description

### 1. Field of the invention

The present invention relates to an operating device for supplying at least one light source, preferably at least one LED, with electrical energy; a lamp comprising at least one such operating device and at least one light source; as well as a method for controlling such an operating device.

### 2. Technical background

In the prior art, operating devices for light sources, which comprise an actively switched converter with a switch and an energy storage are well known. The control unit of such operating devices is configured to control the electrical energy supplied to the respective light source by controlling the switching of the switch of the converter and, thus, the charging and discharging of the energy storage.

Usually for such a control the control unit has to be supplied with different electrical parameters of the converter, such as the current flowing through the switch in the conducting state of the switch, the voltage at the output terminals of the converter respectively across the light source electrically connected at the output terminals and the current flowing through the energy storage of the converter. Namely, on the basis of the current flowing through the switch in the conducting state, the control unit can control the switching off of the switch when the current through the switch reaches a maximum current value; and on the basis of the current flowing through the energy storage during the non-conducting state of the switch, the control unit can control the switching on of the switch when the current through the energy storage reaches zero Ampere, i.e at the time of the zero crossing of the current through the energy storage.

Typically, each electric parameter is supplied via a separate pin of the control unit to the control unit, wherein measurement units constituting an ohmic load, such as a voltage divider made of two ohmic resistors, are used for measuring the electric parameters. As a result, a current drains from the electrical energy source used for supplying the converter of the operating device, even when the converter is in the standby modus, i.e. the switching of the switch of the converter is stopped by the control unit.

Especially for emergency operating devices operating emergency light sources from a battery as an electrical energy source, this current drain in the standby modus is disadvantageous as the battery is discharged during the standby modus reducing the electrical energy available in the battery for supplying the operating device with electrical energy in an emergency state, in which e.g. the electrical energy supply from mains is not working.

Moreover with increasing numbers of pins the dimension of the control unit of the operating device increase, which increases the dimensions of the operating device and the costs thereof.

Document CN103597723 A discloses, for the purpose of power factor correction, an inductor supplied with an input voltage, a controllable switch element coupled with the inductor being opened or closed to optionally charge or discharge the inductor. The discharge current of the inductor is supplied to an output via a diode. When an overvoltage is detected, the system is switched to overvoltage operation in order to make sure by repeatedly switching the switch element on and off that the diode is conductive.

Therefore, it is an object of the present invention to provide an operating device for supplying at least one light source with electrical energy, wherein the operating device does not comprise the above mentioned disadvantages.

These and other objects, which become apparent upon reading the following description, are solved by the subject-matter of the independent claim. The dependent claims refer to preferred embodiments of the invention.

### Summary of the invention

According to the invention an operating device for supplying at least one light source, preferably at least one LED, with electrical energy may comprises:
- at least one input terminal for electrically connecting an electrical energy source preferably a battery, configured to supply electrical energy to the operating device;
- at least one output terminal for electrically connecting the at least one light source to the operating device,
- at least one actively switched converter, preferably a boost convert or a flyback converter, electrically connected with the at least one input terminal (IN, IN') and the at least one output terminal (OUT, OUT') of the operating device (1), and
- a control unit (3), preferably an ASIC;
- wherein the at least one converter (2) comprises a first switch (Q1), preferably transistor, and an energy storage (L1), preferably inductor, which are electrically connected in series; and
- wherein the control unit (3) is configured to control the switching of the first switch (Q1) in order to control the charging and discharging of the energy storage (L1) and, thus, the voltage, current and/or electrical energy output by the converter.

The control unit may comprise a (preferably single) sensing pin connected to a capacitive shunt, such as e.g. the midpoint of a capacitive voltage divider. Thus, a switched converter is proposed, with closed loop control, but a capacitive shunt instead of a resistive shunt. Preferably the device is void of a resistive shunt as to the closed loop control of the switched converter, which preferably is a boost converter. This increases the efficiency of the device without increasing the costs.

According to the invention an operating device for supplying at least one light source, preferably at least one LED, with electrical energy is provided; wherein the operating device comprises at least one input terminal for electrically connecting an electrical energy source, preferably a battery, configured to supply electrical energy to the operating device; at least one output terminal for electrically connecting the at least one light source to the operating device; at least one actively switched converter, preferably a boost convert or a flyback converter, electrically connected with the at least one input terminal and the at least one output terminal of the operating device; and a control unit, preferably an ASIC. The at least one converter comprises a first switch, preferably transistor, and an energy storage, preferably inductor, which are electrically connected in series; and the control unit is configured to control the switching of the first switch in order to control the charging and discharging of the energy storage and, thus, the voltage, current and/or electrical energy output by the converter.

The control unit comprises a single sensing pin for being supplied with a signal representing: the value of the current flowing through the first switch when the first switch is controlled in the conducting state; the value of the voltage across the at least one light source when the at least one light source is electrically connected to the at least one output terminal of the operating device; and the point in time of the zero crossing of the current through the energy storage.

In other words the present invention proposes an operating device for operating at least one light source, in particular at least on light emitting diode (LED), comprising at least one actively switched converter and a control unit configured to control the converter, in particular the switch of the converter, wherein a signal representing the value of the current through the first switch of the converter in the conducting state, the value of the voltage across the at least one light source and the point in time of the zero crossing of the current through the energy storage of the converter may be supplied to the control unit by a single sensing pin.

Hence, the operating device according to the present invention is advantageous, as the number of pins of the control unit for supplying information on different electrical parameters, namely the current flowing through the first switch of the converter in the conducting state; the voltage across the at least one light source, which preferably is the output voltage of the converter, and the point in time of the zero crossing of the current through the energy storage of the converter, is reduced to a single sensing pin and, thus, the dimensions and costs of the operating device are decreased.

Under the "*first switch"* the switch of the actively switched converter is to be understood.

Under *"the current through the first switch"* or *"the current flowing through the first switch"* the current that flows through the first switch when the first switch is in the conducting state is to be understood. Since the energy storage and the first switch of the converter are electrically connected in series, the current flowing through the first switch when the first switch is in the conducting state corresponds to the current flowing through the energy storage.

The electrical energy source is preferably a battery, which preferably is rechargeable. Preferably, the electrical energy source is part of the operating device, wherein the electrical energy source is electrical connected to at least one input terminal of the converter of the operating device.

Preferably, the operating device is an emergency operating device, that is configured to supply the at least one light source with electrical energy, in particular from a preferably rechargeable battery, in case of an emergency, such as the electrical energy supply from mains is not working and/or fire etc.

The at least one actively switched converter is preferably a boost converter or a flyback converter.

The operating device may have one or more actively switched converters. In case the operating device comprises more than one actively switched converter, the actively switched converters are preferably cascaded. The actively switched converters may be of the same converter type or of different converter types.

The first switch of the converter is preferably a transistor, more preferably a field effect transistor (FET), most preferably a metal oxide semiconductor field effect transistor (MOSFET). The present invention is not limited to any transistor type for the first switch of the converter.

Preferably, the energy storage of the converter is an inductor or a choke. The energy storage of the converter may also be a transformer, in particular at least the primary winding or primary inductor of the transformer, wherein the transformer may be provided in the converter for galvanically isolating the input and the output of the converter from each other.

The control unit is preferably an application-specific integrated circuit (ASIC).

Preferably, the control unit comprises analogous circuitry, in particular a gate driver, for controlling respectively driving the converter, in particular the first switch of the converter.

Preferably, the control unit is configured to measure via the sensing pin the current flowing through the first switch, when the first switch is in the conducting state; and the control unit is preferably configured to measure via the sensing pin the voltage across the at least one light source and to detect via the sensing pin the point in time of the zero crossing of the current through the energy storage, when the first switch is in the non-conducting state.

In particular, the control unit is configured to measure via the sensing pin the current flowing through the first switch, when the control unit controls the first switch to be in the conducting state; and the control unit is preferably configured to measure via the sensing pin the voltage across the at least one light source and to detect via the sensing pin the point in time of the zero crossing of the current through the energy storage, when the control unit controls the first switch to be in the non-conducting state.

Preferably, the sensing pin is a low voltage pin compared to the at least one input terminal of the operating device.

This is advantageous as the control unit cannot be destroyed by a high voltage, such as the voltage supplied from the electrical energy source to the at least one input terminal of the operating device.

Furthermore, the control unit is preferably configured for an over current monitoring via the sensing pin.

In particular, the control unit is configured to monitor the point in time when the current flowing through the first switch reaches a maximum current value. Thus, the control unit is preferably configured to monitor the current of the energy storage, which increase when the first switch is conducting, in order to detect the point in time when the current through the energy storage reaches the maximum current value.

Moreover the operating device preferably comprises a voltage divider comprising a series connection of a first capacitor and a second capacitor; wherein the voltage divider is electrically connected in parallel to the first switch of the converter; and the sensing pin is electrically connected to the node between the two capacitors of the voltage divider.

Preferably, the two capacitors are part of a measurement circuit of the operating device.

That is, via a voltage divider comprising two capacitors electrically connected in series the control unit is preferably configured to measure the current flowing through the first switch when the first switch is in the conducting state; to measure via the sensing pin the voltage across the at least one light source and to detect via the sensing pin the point in time of the zero crossing of the current through the energy storage.

This is advantageous, as no current will be drawn by the elements of the measurement circuit of the operating device, namely by the two capacitors forming a voltage divider, when the operating device, in particular the converter, is in the standby modus. In the standby modus the first switch of the converter is in the non-conducting state and the control unit does not switch the first switch of the converter.

As a result, no current and/or no electrical energy drains from the electrical energy source as a result of the measurement circuit of the operating device when the operating device is in the standby modus and the electrical energy source is electrically connected to the at least one input terminal of the operating device. Therefore, in case the electrical energy source is a battery, the battery is not discharged during the standby modus of the operating device, when the battery is electrically connected to the at least one input terminal of the operating device.

In a first preferred alternative, the operating device comprises a diode electrically connected in parallel to the first capacitor, such that the cathode of the diode is electrically connected with the node between the energy storage and the first switch and the anode of the diode is electrically connected with the node between the two capacitors of the voltage divider.

Preferably, the two capacitors and the diode form a measurement circuit of the operating device.

This is advantageous, as no current will be drawn by the elements of the measurement circuit of the operating device, namely the two capacitors forming a voltage divider and the diode, when the operating device, in particular the converter, is in the standby modus. In the standby modus the first switch of the converter is in the non-conducting state and the control unit does not switch the first switch of the converter.

As a result, no current and/or no electrical energy drains from the electrical energy source as a result of the measurement circuit of the operating device when the operating device is in the standby modus and the electrical energy source is electrically connected to the at least one input terminal of the operating device. Therefore, in case the electrical energy source is a battery, the battery is not discharged during the standby modus of the operating device, when the battery is electrically connected to the at least one input terminal of the operating device.

Furthermore, the control unit preferably comprises a current source configured to provide a current flow via the sensing pin when the first switch is in the conducting state, such that the diode is forward biased when the first switch is in the conducting state, and to provide no current flow via the sensing pin when the first switch is in the non-conducting state, such that the diode is reversed biased when the first switch is in the non-conducting state.

That is, the current source of the control unit is configured to control whether the diode is forward biased or reverse biased, i.e. conducting or not conducting. The present invention is not limited to any specific current source.

In particular, when the first switch is in the conducting state the current source is configured to provide via the sensing pin the current that is required to forward bias the diode and to charge the second capacitor of the voltage divider as the voltage across the first switch increases as a result of the current flowing from the energy storage through the first switch is increasing. The current flowing from the energy storage through the first switch increases because the energy storage of the converter is being charged when the switch of the converter is in the conducting state.

Moreover, the control unit is preferably configured to measure via the sensing pin a combined voltage of the forward voltage across the diode and the voltage across the first switch, when the first switch is in the conducting state.

This combined voltage indicates the current flowing through first switch in the conducting state, as the voltage across the first switch corresponds to the internal ohmic resistance of the first switch in the conducting state multiplied with the current flowing through the first switch.

Thus, the control unit is preferably configured to measure via the sensing pin P the current flowing through the first switch in the conducting state by measuring via the sensing pin the combined voltage of the forward voltage across the diode and the voltage across the first switch of the converter, when the first switch is in the conducting state.

In a second preferred alternative, the operating device preferably comprises a second switch, preferably a transistor, electrically connected in parallel to the first capacitor, such that one side of the second switch is electrically connected with the node between the energy storage and the first switch and the other side of the second switch is electrically connected with the node between the two capacitors of the voltage divider, and the control unit is preferably configured to synchronously control the switching of the first switch and the second switch.

In particular, the control unit is configured to switch the second switch on, i.e. from the non-conducting to the conducting state, when the control unit switches the first switch on, and to switch the second switch off, i.e. from the conducting state to the non-conducting state, when the control unit switches the second switch off.

The second switch of the converter is preferably a transistor, more preferably a field effect transistor (FET), most preferably a metal oxide semiconductor field effect transistor (MOSFET). The present invention is not limited to any transistor type for the second switch of the converter.

Moreover, the control unit is preferably configured to measure via the sensing pin the voltage across the first switch when the first switch and the second switch are in the conducting state.

The voltage across the first switch in the conducting state corresponds to the internal ohmic resistance of the first switch in the conducting multiplied with the current flowing through the first switch in the conducting.

Thus, the control unit is preferably configured to measure via the sensing pin the current flowing through the first switch in the conducting state by measuring the voltage across the first switch of the converter when the first switch is in the conducting state.

In particular, the control unit is configured to synchronously switch the second switch on when switching the first switch on, in order to short circuit the first capacitor. As a result the voltage across the second capacitor preferably corresponds to the voltage across the first switch in the conducting state and the control unit is preferably configured to measure the voltage across the first switch in the conducting state by measuring via the sensing pin the voltage across the second capacitor when the first switch is in the conducting state.

Preferably, the control unit is configured to compare the voltage measured via the sensing pin when the first switch is in the conducting state with a first voltage value. In particular, the control unit preferably comprises a first comparator configured to compare the voltage measured via the sensing pin when the first switch is in the conducting state with the first voltage value.

As outlined already above, the voltage measured via the sensing pin when the first switch is in the conducting state preferably indicates respectively reflects the current flowing through the first switch and, thus, the current flowing through the energy storage of the converter. Therefore, by comparing the voltage measured via the sensing pin when the first switch is in the conducting state with the first voltage value the control unit is configured to detect respectively determine the point in time when the current of the energy storage reaches a maximum current value, represented by the first voltage value.

In particular, the control unit is configured to measure the voltage across the second capacitor via the sensing pin when the first switch is in the conducting state respectively switched on and to compare the measured voltage with the first voltage value.

The present invention is not concerned with how the first voltage value is generated and/or supplied to the control unit. Therefore, the first voltage value may be generated and/or supplied to the control unit by any means or method. For example, the first voltage value may be provided from extern respectively from outside the operating device to the control unit as a control parameter for controlling the switching of the first switch.

Alternatively or additionally, the first voltage value may be adaptively estimated voltage value, such that by adapting the first voltage value the light output by the at least one light source or the average current flowing through the at least one light source (when the at least one light source is connected to the at least one output terminal of the operating device) may be controlled. The present invention is not concerned with the control loop for estimating the first voltage value and, thus, any means or method may be used for implementing this control loop.

Furthermore, the control unit is preferably configured to control the first switch to switch from the conducting state to the non-conducting state, when the voltage measured via the sensing pin reaches the first voltage value.

Therefore, the switching off of the first switch may be controlled by the first voltage value. Thus, the time period for which the first switch is in the conducting state respectively switched on and for which the energy storage of the converter is charged may be controlled by the first voltage value.

Preferably, the control unit is configured to store the voltage measured via the sensing pin shortly before, shortly after or at the same time the control unit controls the first switch to switch from the conducting state to the non-conducting state, and the control unit is preferably configured to determine based on the stored voltage and the voltage measured via the sensing pin when the first switch is in the non-conducting state the voltage across the at least one light source. In particular, the control unit preferably comprises a sample and hold unit configured to store the voltage measured via the sensing pin shortly before, shortly after or at the same time the control unit controls the first switch to switch from the conducting state to the non-conducting state.

Moreover, the control unit is preferably configured to measure via the sensing pin the voltage across the second capacitor when the first switch is in the non-conducting state and to compare the voltage measured via the sensing pin with a second voltage value. In particular, the control unit preferably comprises a second comparator configured to compare the voltage measured via the sensing pin when the first switch is in the non-conducting state with the second voltage value.

Preferably, the control unit is configured to detect the point in time of the zero crossing of the current flowing through the energy storage when the voltage measured via the sensing pin reaches the second voltage value.

In particular, when the first switch is in the non-conducting state the current of the energy storage decreases and the energy storage discharges, wherein when the current of the energy storage approaches zero Ampere, the voltage of the energy storage preferably will start to ring respectively resonate through the resonant circuitry formed by the two capacitors of the voltage divider and the energy storage. The control circuit is preferably configured to measure via the sensing pin the voltage across the second capacitor and to determine the time of the zero crossing of the current of the energy storage when the voltage across the capacitor reaches or falls below the second voltage value.

Furthermore, the control unit is preferably configured to control the first switch to switch from the non-conducting state to the conducting state, when the voltage measured via the sensing pin reaches the second voltage value.

Therefore, the switching on of the first switch may be controlled by the second voltage value. Thus, the time period for which the first switch is in the non-conducting state respectively turned off and for which the energy storage of the converter is discharged may be controlled by the second voltage value.

The control unit may control the first switch, preferably in a predictive manner, such that the current through the energy storage is essentially constant, preferably even if the battery voltage and/or the voltage across the lighting means is fluctuating.

According to the invention a lamp is also provided, wherein the lamp comprises at least one operating device according to the present invention, as described above, and at least one light source, preferably at least one LED; wherein the at least one light source is electrically connected to the at least one output terminal of the operating device, and the operating device is configured to supply the at least one light source with electrical energy.

That is, the lamp comprises one or more operating device according to the present invention and one or more light sources.

The at least one light source of the lamp is preferably a light emitting diode (LED). The term *"LED"* is to be understood as comprising any type of light-emitting diode, such as organic LED, non-organic LED, low power LED, high power LED, etc. According to the present invention, the at least one light source is not limited to LED.

In case the lamp comprises more than one light source, the light sources may be electrically connected in series and/or parallel to each other; and the light sources may be of the same light source type or of different light source types.

The lamp may comprise only one operating device according to the invention and one or more light sources, wherein the operating device is configured to operate the one or more light sources.

Preferably, the lamp may comprise more than one operating device, wherein each operating device is configured to control a group of light sources.

Preferably, the lamp comprises at least one battery as an electrical energy source, which preferably is rechargeable, wherein the at least one operating device according to the invention is supplied with electrical energy from the at least one battery.

The lamp is preferably an emergency lamp configured to provide emergency lighting in case of an emergency, such as fire, mains fall out etc.

Preferably, the at least one light source is electrically connected to the converter of the operating device via a third switch, which is preferably controllable by the control unit of the operating device.

The at least one light source may be isolated by the third switch from the at least one operating device when the third switch is in the non-conducting state.

According to the invention a method for controlling an operating device, preferably an operating device according to the present invention, as described above, for supplying at least one light source, preferably at least one LED, with electrical energy is also provided; wherein the operating device comprises at least one input terminal for electrically connecting an electrical energy source, preferably a battery, configured to supply electrical energy to the operating device; at least one output terminal for electrically connecting the at least one light source to the operating device; at least one converter, preferably a boost convert or a flyback converter, electrically connected with the at least one input terminal and the at least one output terminal of the operating device, and a control unit, preferably an ASIC, wherein the at least one converter comprises a first switch, preferably transistor, and an energy storage, preferably inductor, which are electrically connected in series. The control unit controls the switching of the first switch in order to control the charging and discharging of the energy storage and, thus, the voltage, current and/or electrical energy output by the converter. Furthermore, the control unit comprises a single sensing pin measuring via the sensing pin the current flowing through the first switch when the first switch is controlled in the conducting state; measuring via the sensing pin the voltage across the at least one light source when the at least one light source is electrically connected to the at least one output terminal of the operating device; and detecting via the sensing pin the point in time of the zero crossing of the current through the energy storage.

### 4. Description of a preferred embodiment

In the following, the invention is described exemplarily with reference to the enclosed figures, in which
**Figure 1** is a schematic circuit diagram of a preferred embodiment of the operating device according to the present invention;
**Figure 2** is a schematic circuit diagram of another example of the operating device not falling under the scope of protection of claim 1 but helpful for the understanding of the present invention.
**Figure 3** is a schematic circuit diagram of another preferred embodiment of the operating device according to the present invention; and
**Figure 4** is a schematic circuit diagram of another example of the operating device not falling under the scope of protection of claim 1 but helpful for the understanding of the present invention. In the figures 1 to 4 corresponding features and electrical parameters are referenced by the same reference signs.

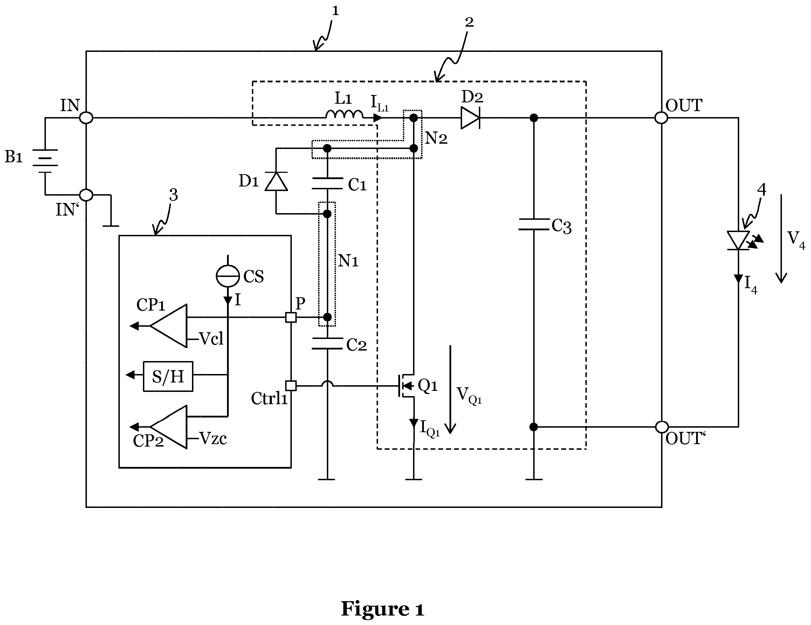

**Figure 1** is a schematic circuit diagram of a preferred embodiment of the operating device according to the present invention.

The operating device 1 according to Figure 1 comprises two input terminals IN, IN'; an actively switched converter 2; a control unit 3 and two output terminals OUT, OUT'. As mentioned already above, the operating device may also comprise only one input terminal or more than two input terminals, more than one actively switched converter 2 and only one output terminal or more than two output terminals. That is, the operating device according to the present invention comprises at least one input terminal, at least one actively switched converter, a control unit and at least one output terminal.

The two input terminals IN, IN' of the operating device 1 are provided for electrically connecting an electrical energy source B1 to the operating device 1. According to Figure 1 a battery B1 is electrically connected as electrical energy source to the input terminals IN, IN' of the operating device 1. Preferably, the input terminal IN is the input terminal with the higher potential and the input terminal IN' is the input terminal with the lower potential. The input terminal IN' preferably is electrically connected to ground.

The two output terminals OUT, OUT' of the operating device 1 are provided for electrically connecting at least one light source 4, such as a LED, to the operating device 1. Preferably, the output terminal OUT is the output terminal with the higher potential and the output terminal OUT' is the output terminal with the lower potential. The output terminal OUT' preferably is electrically connected to ground.

The actively switched converter 2 according to Figure 1 is a boost converter that is configured to convert the voltage and/or current, supplied from the battery B1 via the input terminals IN, IN' of the operating device 1, to a higher output voltage and/or current, which is provided at the output terminals OUT, OUT' of the operating device 1 for electrically supplying the at least one light source 4, electrically connected via the output terminals OUT, OUT' to the operating device 1.

The actively switched converter 2 comprises an energy storage L1 and a switch Q1, which are electrically connected in series to each other. In particular, the energy storage L1 is electrically connected on one side to the input terminal IN with the higher potential and on the other side to the switch Q1. The switch Q1 is connected on one side with the energy storage L1 and on the other side with ground. The converter 2 further comprises a diode D2 and a capacitor C3, wherein the anode of the diode D2 is connected to the node N2 between the energy storage L1 and the switch Q1 and the cathode of the diode D2 is connected to one side of the capacitor C3 and the output terminal OUT with the higher potential. The capacitor C3 is an output capacitor C3 of the converter for storing the voltage provided by the converter 2.

The energy storage L1 is preferably an inductor or choke and the switch Q1 is preferably a transistor, in particular a MOSFET. The switch Q1 is not limited to the transistor type shown in Figure 1.

The converter 2 functions as a boost converter. That is, when the switch Q1 is in the conducting state the energy storage L1 gets charged from the battery B1 and, thus, the current I_{L1} of the energy storage I_{L1} increases. During the conducting state of the switch Q1 the diode D2 is reverse biased preventing a current flow from the capacitor C3 back to the energy storage L1 or switch Q1 and the at least one light source 4 is provided with voltage, current and/or electrical energy from the capacitor C3. When the switch is switched to the non-conducting state, i.e. is switched off, the energy storage L1 gets discharged and, thus, the current I_{L1} of the energy storage L1 decreases. During the non-conducting state of the switch Q1 the diode D2 is forward biased allowing the current I_{L1} from the energy storage L1 to flow to the capacitor C3. Thus, the capacitor C3 is charged with electrical energy from the energy storage L1 during the non-conducting state of the switch Q1.

The operating device comprises a control unit 3 configured to control the switching of the switch Q1 of the converter 2 and, thus, the charging and discharging of the energy storage L1. Therefore, the control unit 3 is configured to control the current, voltage and/or electrical energy output by the converter 2 for driving the at least one light source 4.

For obtaining respectively measuring the current I_{Q1} through the switch Q1 in the conducting state of the switch Q1 and the voltage V₄ across the at least one light source 4 connected to the output terminals OUT, OUT' of the operating device 1 the control unit 3 comprises a single sensing pin P. The control unit 4 is also configured to detect via the sensing pin P the point in time of the zero crossing of the current I_{L1} flowing through energy storage L1. That is, the control unit 3 comprises a single sensing pin P for being supplied with a signal representing the value of the current I_{Q1} flowing through the first switch Q1 when the first switch Q1 is controlled in the conducting state, the value of the voltage V₄ across the at least one light source 4 when the at least one light source 4 is electrically connected to the output terminals OUT, OUT' of the operating device 1, and the point in time of the zero crossing of the current I_{L1} through the energy storage L1.

According to Figure 1 the pin P of the control unit 3 is electrically connected via a diode D1, a first capacitor C1 and a second capacitor C2 to the converter 2, in particular to the node N2 between the energy storage L1 and the switch Q1 of the converter 2. The diode D1 and the two capacitors C1 and C2 are part of the operating device 1 and preferably form a measurement circuit.

Since the sensing pin P is electrically connected to the converter 2 via the voltage divider comprising the two capacitors C1 and C2, the sensing pin P is a low voltage pin, in particular compared with the potential of the input terminal IN of the operating device 1.

In particular, the two capacitors C1 and C2 are electrically connected in series to each other and form a voltage divider. The series connection of the two capacitors C1 and C2 is electrically connected in parallel to the switch Q1 of the converter 2. In detail, the first capacitor C1 is electrically connected on one side to the node N2 between the energy storage L1 and the switch Q1 and on the other side to the second capacitor C2, and the second capacitor C2 is electrically connected on one side to the first capacitor C1 and on the other side to ground. The sensing pin P of the control unit 3 is electrically connected to the node N1 between the first capacitor C1 and the second capacitor C2.

Preferably, the diode D1 is electrically connected in parallel to the first capacitor C1, such that the cathode of the diode D1 is electrically connected to the node N2 between the energy storage L1 and the switch Q1, and the anode of the diode D1 is electrically connected to the node N1 between the first capacitor C1 and the second capacitor C2.

Preferably, the control unit 3 is an ASIC.

The control unit 3 preferably comprises a current source CS, a first comparator CP1, a second comparator CP2 and/or a sample and hold unit S/H.

The control unit 3 is configured to generate a control signal Ctrl1 for controlling the switch Q1 of the converter 2. In particular, the control unit 3 can comprise a gate driver for generating the control signal Ctrl1.

As mentioned already above, the control unit 3 is configured to obtain respectively measure via the single sensing pin P the current I_{Q1} through the switch Q1 of the converter 2 when the switch Q1 is controlled by the control unit 3 to be in the conducting state (when the switch Q1 is switched on) and the voltage V₄ across the at least one light source 4 when the switch Q1 is controlled by the control unit 3 to be in the non-conducting state (when the switch Q1 is switched off). In addition, the control unit 3 is configured to detect via the sensing pin P the point in time of the zero crossing of the current I_{L1} through the inductor L1 in the freewheeling phase when the switch Q1 is controlled by the control unit 3 to be in the non-conducting state (when the switch Q1 is switched off).

When the switch Q1 is controlled to be in the conducting state, the control unit 3 measures via the sensing pin P a combined voltage of the forward voltage across the diode Di and the voltage V_{Q1} across the switch Q1. In particular, the voltage V_{Q1} across the switch Q1 corresponds to the current I_{Q1} through the switch Q1 multiplied with the internal ohmic resistance of the switch Q1 in the conducting state. For example, when the switch is a MOSFET, as shown in Figure 1, the voltage V_{Q1} across the MOSFET corresponding to the drain-source voltage corresponds to the current flowing from the drain-terminal to the source-terminal of the MOSFET Q1 multiplied by the internal ohmic resistance R_{DS} of the MOSFET Q1. Since the voltage V_{Q1} across the switch Q1 in the conducting state corresponds to the current I_{Q1} through the switch Q1 in the conducting state multiplied with the internal ohmic resistance of the switch Q1, the control unit 3 is configured to measure via the pin P the current I_{Q1} through the conducting switch Q1 by measuring via the pin P the combined voltage of the forward voltage of diode D1 and the voltage V_{Q1} across the switch Q1.

During the time period when the control unit 3 controls the switch Q1 to be in the conducting state, the control unit 3 controls the current source CS to supply a current via the sensing pin P in order to forward bias the diode D1 of the measurement circuit. In particular, when the switch Q1 is in the conducting state the control unit 3 controls the current source CS to supply a current value that is required to forward bias the diode D1 and to charge the capacitor C2 as the voltage V_{Q1} across the switch Q1 increases. The voltage V_{Q1} across the switch Q1 increases due to the current I_{L1} of the energy storage L1 and, thus, the current I_{Q1} through the switch Q1 increasing when the switch Q1 is controlled to be in the conducting state.

With other words, the control unit 3, in particular the internal current source CS of the control unit 3, is configured to control whether the diode D1 is forward biased or reverse biased.

The control unit 3, in particular the first comparator CP1 of the control unit 3, is configured to compare the voltage measured via the sensing pin P when the switch Q1 is in the conducting state with a first voltage value Vcl. Preferably, the control unit 3 is configured to detect respectively determine that the current I_{L1} through the energy storage L1, which increase when the switch Q1 is in the conducting state, reaches a maximum current value when the voltage measured via the sensing pin P reaches the first voltage value Vcl. Therefore, the control unit 3 is preferably configured for an over current monitoring.

Furthermore, the control unit 3 is configured to switch the switch Q1 off as a result of the voltage measured via the sensing pin P when the switch Q1 is in the conducting state reaching the first voltage value Vcl. Therefore, the control unit 3 is preferably configured to control charging of the energy storage L1, in particular the time period during which the energy storage L1 is charged. Namely, when the switch Q1 is controlled to switch off, i.e. to switch from the conducting state to the non-conducting state, the current I_{L1} of the energy storage L1 stops increasing and starts to decrease discharging the energy storage L1 again.

Preferably, the first voltage value V_{CL} is an adaptively estimated value, such that by adapting the first voltage value V_{CL} the light output by the at least one light source 4 connected to the operating device 1 or the average current I₄ through the at least one light source 4 may be controlled. As already mentioned above, the present invention is not concerned with the control loop for estimating the first voltage value V_{CL} and, thus, this control loop may be provided by any means or method.

When the control unit 3 controls the switch Q1 to switch off, it also controls the current source CS to stop providing a current I via the sensing pin P. Therefore the diode D1 is reverse biased and not conducting when the switch Q1 is switched off and the second capacitor C2 is not charged anymore by the current source CS.

The voltage across the diode D2 of the converter 2 is clamped on the voltage V₄ of the at least one light source 4 and the current I_{L1} supplied from the energy storage L1 flows through the Diode D2 and charges the capacitor C3 of the converter 2 when the switch Q1 is controlled by the control unit 3 to be in the non-conducting state.

Therefore, when the switch Q1 is in the non-conducting state, the voltage at the sensing pin P is a measure of the voltage V₄ across the at least one light source 4. With other words, the control unit 3 is configured to measure the voltage V₄ across the at least one light source 4 by measuring the voltage at the pin P when the switch Q1 is controlled to be in the non-conducting state. In particular, the control unit 3 is configured to measure the voltage V₄ across the at least one light source 4 by measuring via the sensing pin P the voltage across the second capacitor C2 of the voltage divider connected in parallel to the switch Q1 when the switch Q1 is controlled to be in the non-conducting state.

Preferably, since the capacitor C2 will already be charged to a voltage value when the control unit 3 controls the switch Q1 to switch off, the control unit 3 is configured to determine the voltage V₄ across the at least one light source 4 on the basis of the difference between the voltage value across the capacitor C2 before the switch Q1 is switched off and the voltage value across the capacitor C2 after the switch Q1 is switched off. This difference is namely caused by the voltage drop across the diode D2 of the converter 2 indicating the voltage V₄ across the at least one light source 4 when the switch is switched off.

In particular, the sample and hold unit S/H of the control unit 3 is configured to store the voltage measured via the sensing pin P shortly before, shortly after or at the same time the control unit 3 controls the switch Q1 to switch from the conducting state to the non-conducting state, and the control unit 3 is configured to determine based on the stored voltage and the voltage measured via the sensing pin P when the first switch Q1 is in the non-conducting state the voltage V₄ across the at least one light source 4.

As mentioned already above, when the switch Q1 is in the non-conducting state the freewheeling current I_{L1} driven from the energy storage L1 decreases and eventually will reach zero Ampere (zero crossing of the current I_{L1} through the energy storage L1). At the point in time of the zero crossing of the current I_{L1}, i.e. when the current I_{L1} reaches zero Ampere, the diode D2 of the converter 2 stops conducting. At the end of the freewheeling current I_{L1} driven by the energy storage L1 the voltage across the energy storage L1 will start to ring respectively resonate through the resonant circuitry formed by the energy storage L1 of the converter 2 as well as the two capacitors C1 and C2 of the voltage divider.

The control unit 3 is configured to measure via the sensing pin P the voltage across the capacitor C2, which will reduce along the resonance phase at the end of the freewheeling current I_{L1} driven by the energy storage L1, when the switch Q1 is in the non-conducting state. Preferably, the control unit is configured to determine that the current I_{L1} through the energy storage L1 during the non-conducting state of the switch Q1 reaches zero Ampere (zero crossing occurs), when the voltage measured by via the sensing pin P reaches or falls below a second voltage value Vzc.

In particular, the second comparator CP2 of the control unit 3 is configured to compare the voltage measured via the sensing pin P when the first switch Q1 is in the non-conducting state with the second voltage value Vzc.

Preferably, the control unit 3 is configured to detect the point in time of the zero crossing of the current I_{L1} flowing through the energy storage L1 when the voltage measured via the sensing pin P reaches or falls below the second voltage value Vzc. Moreover, the control unit 3 is configured to control the first switch Q1 to switch from the non-conducting state to the conducting state, when the voltage measured via the sensing pin P reaches the second voltage value Vzc.

As mentioned already above, an advantage of the present invention is that when the converter 2 is not operated (standby modus), i.e. the switch Q1 remains in the non-conducting state, no current will be drained due to a measurement circuit of the operating device 1. The measurement circuit of the operating device 1 according to figure 1 comprise the capacitors C1 and C2 as well as the diode Di, wherein the diode D1 is reverse biased when the switch Q1 is in the non-conducting state and, thus, no current will be drawn from the input terminals IN, IN' of the operating device 1 by the measurement circuit during the standby modus.

The operating device 1 and the at least one light source 4 may form a lamp.

Such a lamp may comprise one or more operating devices 1 according to present invention and one or more light sources 4.

The at least one light source 4 is preferably at least one LED.

Preferably, the at least one light source 4 is electrically connected to the converter 2 of the operating device 1 via a third switch, which is preferably controllable by the control unit 3 of the operating device 1 (not shown in Figure 1). This allows to isolate the at least one light source 4 from the converter 2 and, thus, from the input terminals IN, IN' of the operating device 1.

The lamp may comprise the electrical energy source B1, such as a preferably rechargeable battery, for supplying the operating device 1 with electrical energy.

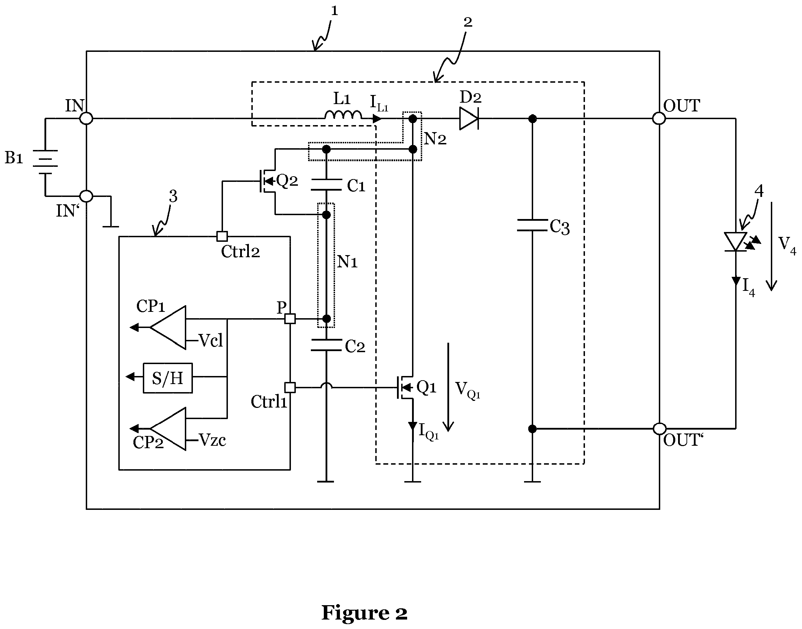

**Figure 2** is a schematic circuit diagram of another example of the operating device not falling under the scope of protection of claim 1 but helpful for the understanding of the present invention.

The operating device according to Figure 2 substantially corresponds to the operating device according to Figur 1 and, thus, the above description of the operating device of Figure 1 is also valid for the operating device of Figure 2. In the following mainly the differences between the operating device of Figure 1 and the operating device of Figure 2 are explained.

The operating device 1 of Figure 2 differs from the operating device 1 of Figure 1 in that the diode D1 of the measurement circuit of Figure 1 has been replaced by a switch Q2.

Therefore, the operating device 1 of Figure 2 comprises two switches Q1 and Q2, wherein the switch Q1 of the converter 2 is referred to as "*first switch"* and the switch Q2 (replacing the diode D1 of Figure 1) of the measurement circuit of the operating device 1 is referred to as *"second switch".*

The control circuit 3 is configured to also control the second switch Q2. In particular, the control circuit 1 is configured to synchronously control the second switch Q2 and the first switch Q1. That is, when the control unit 3 controls the first switch Q1 to switch on, the control unit synchronously controls the second switch Q2 to switch on; and when the control unit 3 controls the first switch Q1 to switch off, the control unit synchronously controls the second switch Q2 to switch off.

Preferably, the control unit 3 is configured to generate a control signal Ctrl2 for controlling the switch Q2. In particular, the control unit 3 can comprise a gate driver for generating the control signal Ctrl2 for the second switch Q2 and/or the control signal Ctrl1 for the first switch Q1.

Since in the operating device 1 of Figure 2 the diode D1 of Figure 1 is replaced by the second switch Q2, there is no need for an internal current source in the control unit 3 of Figure 2 in order to forward bias the diode D1 when the first switch Q1 of the converter 2 is in the conducting state. Therefore, the control unit 3 of Figure 2 does not comprise an internal current source.

When the control unit 3 controls the second switch Q2 to switch from the non-conducting state to the conducting state, the second switch Q2 short circuits the first capacitor C1 and electrically connects the capacitor C2 to the voltage V_{Q1} of the first switch Q1. The conducting state of the second switch Q2 of the operating device according to Figure 2 corresponds to the forward biased state of the diode D1 of the operating device according to Figure 1.

Therefore, the control unit 3 is configured to measure via the sensing pin P the voltage V_{Q1} across the first switch Q1 by measuring via the sensing pin P the voltage across the second capacitor C2, when the first switch Q1 is controlled by the control unit 3 to be in the conducting state. As already mentioned above, the voltage V_{Q1} across the first switch Q1 in the conducting state corresponds to the current I_{Q1} through the first switch Q1 multiplied with the internal ohmic resistance (on-state resistance) of the first switch Q1 in the conducting state. For example, when the first switch is a MOSFET as shown in Figure 2 the voltage V_{Q1} across the MOSFET corresponding to the drain-source voltage corresponds to the current flowing from the drain-terminal to the source-terminal of the MOSFET Q1 multiplied by the internal Ohmic resistance R_{DS} of the MOSFET Q1.

When the control unit 3 controls the first switch Q1 to switch off, the control unit 3 also controls the second switch Q2 to switch off.

As mentioned already above, the voltage across the second capacitor C2 reflects the voltage 4 across the at least one light source 4, electrically connected to the output terminals OUT, OUT', when the first switch Q1 is switched off.

In particular, the control unit 3 is configured to determine the voltage V₄ across the at least one light source 4 on the basis of the difference between the voltage value across the capacitor C2 before the switch is switched off and the voltage value across the capacitor C2 after the switch is switched off. This difference is namely caused by the voltage drop across the diode D2 of the converter 2 indicating the voltage V₄ across the at least one light source 4 when the first switch Q1 is switched off.

As mentioned already above, the control unit is configured to determine, when the first switch is in the non-conducting state, the point in time of the zero crossing of the freewheeling current I_{L1} of the energy storage L1 by monitoring via the sensing pin P the decreasing of the voltage across the second capacitor C2 at the end of the freewheeling phase. The freewheeling phase corresponds to the phase during which the energy storage L1 of the converter 2 discharges and drives a freewheeling current I_{L1} when the first switch Q1 is controlled to be in the non-conducting state.

The control unit 3, in particular the second comparator CP2 of the control unit 3, is configured to compare the voltage across the second capacitor C2, measured via the sensing pin P, with the second voltage value Vzc, and to determine that the current I_{L1} of the energy storage reaches zero Ampere (zero crossing of the current I_{L1} occurs) when the voltage across the second capacitor C2 reaches or falls below the second voltage value Vzc.

Preferably, the control unit 3 is configured to switch the first switch Q1 on, i.e. from the non-conducting state to the conducting state, when the voltage across the second capacitor C2 reaches or falls below the second voltage value, i.e. when the current I_{L1} of the energy storage reaches zero Ampere.

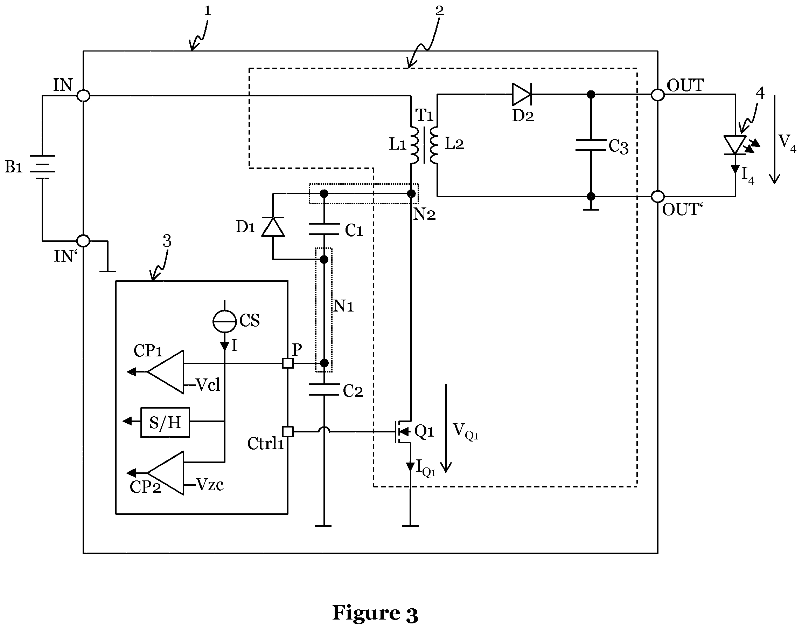

**Figure 3** is a schematic circuit diagram of another preferred embodiment of the operating device according to the present invention.

The operating device according to Figure 3 substantially corresponds to the operating device according to Figur 1 and, thus, the above description of the operating device of Figure 1 is also valid for the operating device of Figure 2. In the following mainly the differences between the operating device of Figure 1 and the operating device of Figure 3 are explained.

The operating device 1 of Figure 3 differs from the operating device 1 of Figure 1 in that the actively switched converter 2 of Figure 1 is a boost converter, whereas the actively switched converter 2 of Figure 3 is a flyback converter with a galvanic isolation between the input and output of the flyback converter.

In detail, the converter 2 of Figure 3 comprises a switch Q1 and in the form of a transformer T1, in particular in the form of at least a primary winding L1 of the transformer T1, an energy storage. The transformer T1 comprises a primary winding respectively primary inductor L1 and a secondary winding respectively secondary inductor L2. The transformer T1 provides a galvanic isolation between a primary side of the converter 2 and a secondary side of the converter 2. On the primary side of the converter 2 the primary winding L1 and the switch Q1 are arranged and on the secondary side the secondary winding L2, the diode D2 and the capacitor C3 are arranged. Preferably, the primary side of the converter 2 corresponds to the input side of the converter 2 and the secondary side of the converter 2 corresponds to the output side.

Preferably, the input terminals IN, IN', the control unit 3 and the measurement circuit comprising the diode D1, first capacitor C1 and second capacitor C2 are arranged on the primary side of the operating device 1 with respect to the transformer T1 of the converter 2 and the output terminals OUT, OUT' are arranged on the secondary side of the operating device 1 with respect to the transformer T1 of the converter 2.

As already mentioned above, the energy storage of the converter 2 of Figure 3 corresponds to the transformer T1, in particular to at least the primary winding L1 of the transformer T1. The switch Q1 is preferably a transistor, in particular a MOSFET. The switch Q1 is not limited to the transistor type shown in Figure 3.

The primary winding L1 of the transformer T1 and the switch Q1 are electrically connected in series to each other. In particular, the primary winding L1 is electrically connected on one side to the input terminal IN with the higher potential and on the other side to the switch Q1. The switch Q1 is connected on one side with the primary winding L1 and on the other side with ground. The converter 2 comprises on the secondary side a diode D2 and a capacitor C3, wherein the anode of the diode D2 is connected to the secondary winding L2 of the transformer T1 and the cathode of the diode D2 is connected to one side of the capacitor C3 and the output terminal OUT with the higher potential. The capacitor C3 is an output capacitor of the converter 2 for storing the voltage provided by the converter 2.

The converter 2 of Figure 3 functions as a flyback converter. That is, when the switch Q1 is in the conducting state the primary winding L1 gets charged from the battery B1 and, thus, the current of the primary winding I_{L1} increases. During the conducting state of the switch Q1 the diode D2 is reverse biased preventing a current flow from the secondary side to the primary side of the converter 2 and the at least one light source 4 is provided with voltage, current and/or electrical energy from the capacitor C3 on the secondary side. When the switch is switched to the non-conducting state, i.e. is switched off, the primary winding L1 gets discharged and, thus, the current of the primary winding L1 decreases. During the non-conducting state of the switch Q1 the diode D2 is forward biased allowing the current to flow from the transformer T1 to the capacitor C3. Thus, the capacitor C3 is charged with electrical energy from the transformer T1 during the non-conducting state of the switch Q1.

According to Figure 3 the sensing pin P of the control unit 3 is electrically connected via a diode Di, a first capacitor C1 and a second capacitor C2 to the converter 2, in particular the node N2 between the first winding L1 of the transformer T1 and the switch Q1 of the converter 2. The diode D1 and the two capacitors C1 and C2 are part of the operating device 1 and preferably form a measurement circuit.

As mentioned already above, for the description of the electrical connection of the diode D1 and the two capacitors C1 and C2 and the description of the control unit 3 reference is made to the respective description of the operating device of Figure 1.

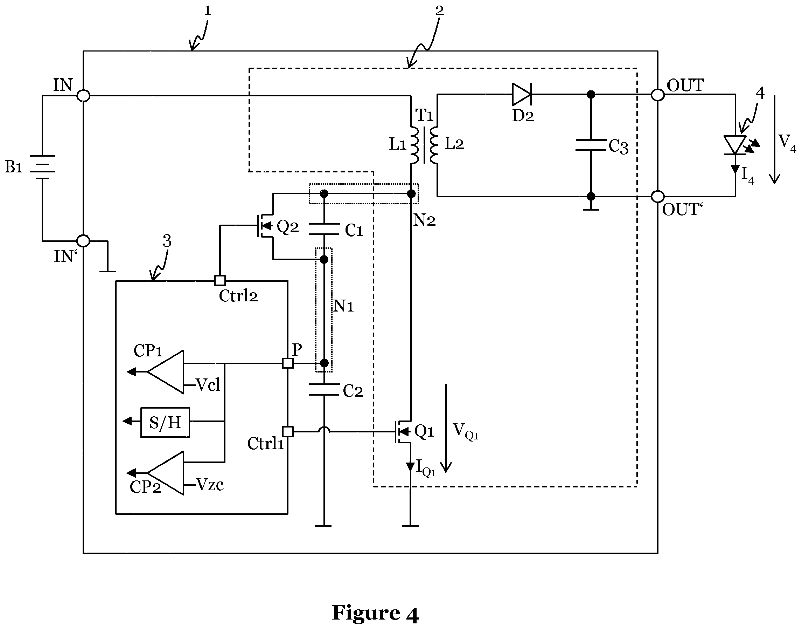

**Figure 4** is a schematic circuit diagram of another example of the operating device not falling under the scope of protection of claim 1 but helpful for the understanding of the present invention.

The operating device according to Figure 4 substantially corresponds to the operating device according to Figur 2 and, thus, the above description of the operating device of Figure 1 and operating device of Figure 2 is also valid for the operating device of Figure 4. In the following mainly the differences between the operating device of Figure 2 and the operating device of Figure 4 are explained.

The operating device 1 of Figure 4 differs from the operating device of Figure 2 in that the actively switched converter 2 of Figure 2 is a boost converter, whereas the actively switched converter 2 of Figure 4 is a flyback converter with a galvanic isolation between the input and output of the flyback converter.

For the description of the flyback converter 2 of the operating device according to Figure 4 reference is made to the above description of the flyback converter 2 of the operating device according to Figure 3.

The control unit controls may control the first switch S1, preferably in a predictive manner, on the basis of the signal at the sensing pin, such that the current through the energy storage L1 is essentially constant, preferably even if the battery voltage and/or the voltage across the lighting means is fluctuating.

In one switching cycle of the converter the signal at the sensing pin is sensed, and in one of the following switching cycles the clocking (duty cycle) of the switch is modified, depending on the previously sensed signal, such that the current through the inductor L1, representing the battery discharge current, is kept constant.

## Claims

1. Operating device (1) for supplying at least one light source (4), preferably at least one LED, with electrical energy,
- wherein the operating device (1) comprises
- at least one input terminal (IN, IN') for electrically connecting an electrical energy source (B1), preferably a battery, configured to supply electrical energy to the operating device (1);
- at least one output terminal (OUT, OUT') for electrically connecting the at least one light source (4) to the operating device (1),
- at least one actively switched converter (2), preferably a boost convert or a flyback converter, electrically connected with the at least one input terminal (IN, IN') and the at least one output terminal (OUT, OUT') of the operating device (1), and
- a control unit (3), preferably an ASIC;
- wherein the at least one converter (2) comprises a first switch (Q1), preferably transistor, and an energy storage (L1), preferably inductor, which are electrically connected in series; and
- wherein the control unit (3) is configured to control the switching of the first switch (Q1) in order to control the charging and discharging of the energy storage (L1) and, thus, the voltage, current and/or electrical energy output by the converter (2); **characterized in that**
- the control unit (3) comprises a single sensing pin (P) connected to capacitive shunt, i.e. by connecting it to the midpoint of a capacitive voltage divider, wherein the capacitive voltage divider comprises a series connection of a first capacitor (C1) and a second capacitor (C2);
- the voltage divider being electrically connected in parallel to the first switch (Q1) of the converter (2); and
- the sensing pin (P) being electrically connected to the node (N1) between the two capacitors (C1, C2) of the voltage divider, wherein the control unit (3) is configured to measure via the sensing pin (P) the current (I_{Q1}) flowing through the first switch (Q1), when the first switch (Q1) is in the conducting state; and
- the control unit (3) is configured to measure via the sensing pin (P) the voltage (V₄) across the at least one light source (4) and to detect via the sensing pin (P) the point in time of the zero crossing of the current (I_{L1}) through the energy storage (L1), when the first switch (Q1) is in the non-conducting state, wherein the control unit (3) is configured for an over current monitoring via the sensing pin (P), wherein
- the operating device (1) comprises a diode (D1) electrically connected in parallel to the first capacitor (C1), such that the cathode of the diode (D1) is electrically connected with the node (N2) between the energy storage (L1) and the first switch (Q1) and the anode of the diode (D1) is electrically connected with the node (N1) between the two capacitors (C1, C2) of the voltage divider, wherein the control unit (3) comprises a current source (CS) configured to:
- provide a current flow (I) via the sensing pin (P) when the first switch (Q1) is in the conducting state, such that the diode (D1) is forward biased when the first switch (Q1) is in the conducting state, and
- to provide no current flow via the sensing pin (P) when the first switch (Q1) is in the non-conducting state, such that the diode (D1) is reversed biased when the first switch (Q1) is in the non-conducting state.

2. The operating device (1) according to any of the preceding claims, wherein
- the operating device (1) comprises a second switch (Q2), preferably a transistor, electrically connected in parallel to the first capacitor (C1), such that one side of the second switch is electrically connected with the node (N2) between the energy storage (L1) and the first switch (Q1) and the other side of the second switch (Q2) is electrically connected with the node (N1) between the two capacitors (C1, C2) of the voltage divider, and
- the control unit (3) is configured to synchronously control the switching of the first switch (Q1) and the second switch (Q2).

3. The operating device (1) according to claim 8, wherein
- the control unit (3) is configured to measure via the sensing pin (P) the voltage across the first switch (Q1) when the first switch (Q1) and the second switch (Q2) are in the conducting state.

4. The operating device (1) according to any of the preceding claims, wherein
- the control unit (3) is configured to store the voltage measured via the sensing pin (P) shortly before, shortly after or at the same time the control unit (3) controls the first switch (Q1) to switch from the conducting state to the non-conducting state, and
- the control unit (3) is configured to determine based on the stored voltage and the voltage measured via the sensing pin (P) when the first switch (Q1) is in the non-conducting state the voltage (V₄) across the at least one light source (4),
- preferably the control unit (3) comprises a sample and hold unit (S/H) configured to store the voltage measured via the sensing pin (P) shortly before, shortly after or at the same time the control unit (3) controls the first switch (Q1) to switch from the conducting state to the non-conducting state.

5. The operating device (1) according to any of the preceding claims, wherein
- the control unit (3) is configured to measure via the sensing pin (P) the voltage across the second capacitor (C2) when the first switch (Q1) is in the non-conducting state and to compare the voltage measured via the sensing pin (P) with a second voltage value (Vzc),
- preferably the control unit (3) comprises a second comparator (CP2) configured to compare the voltage measured via the sensing pin (P) when the first switch (Q1) is in the non-conducting state with the second voltage value (Vzc).

6. The operating device (1) according to claim 10, wherein
- the control unit (3) is configured to detect the point in time of the zero crossing of the current (I_{L1}) flowing through the energy storage (L1) when the voltage measured via the sensing pin (P) reaches the second voltage value (Vzc).

7. The operating device (1) according to claim 10 or 11, wherein
- the control unit (3) is configured to control the first switch (Q1) to switch from the non-conducting state to the conducting state, when the voltage measured via the sensing pin (P) reaches the second voltage value (Vzc).

8. The operating device according to any of the preceding claims,
wherein, based on the signal at the sensing pin, the control unit controls the first switch (S1), preferably in a predictive manner, such that the current through the energy storage (L1) is essentially constant, preferably even if the battery voltage and/or the voltage across the lighting means is fluctuating.

9. A lamp comprising
- at least one operating device (1) according to any of the preceding claims, and
- at least one light source (4), preferably at least one LED,
- wherein the at least one light source (4) is electrically connected to the at least one output terminal (OUT, OUT') of the operating device (1), and
- the operating device (1) is configured to supply the at least one light source (4) with electrical energy.

10. A method for controlling an operating device (1), preferably an operating device according to any of claims 1 to 16, for supplying at least one light source (4), preferably at least one LED, with electrical energy,
- wherein the operating device (1) comprises
- at least one input terminal (IN, IN') for electrically connecting an electrical energy source (B1), preferably a battery, configured to supply electrical energy to the operating device (1);
- at least one output terminal (OUT, OUT') for electrically connecting the at least one light source (4) to the operating device (1),
- at least one converter (2), preferably a boost convert or a flyback converter, electrically connected with the at least one input terminal (IN, IN') and the at least one output terminal (OUT, OUT') of the operating device (1), and
- a control unit (3), preferably an ASIC;
- wherein the at least one converter (2) comprises a first switch (Q1), preferably transistor, and an energy storage (L1), preferably inductor, which are electrically connected in series;
- wherein the control unit (3) controls the switching of the first switch (Q1) in order to control the charging and discharging of the energy storage (L1) and, thus, the voltage, current and/or electrical energy output by the converter (2);
**characterized in that**
the method comprises the steps of:
- connecting a single sensing pin (P) to a capacitive shunt i.e. by connecting it to the midpoint of a capacitive voltage divider, wherein the capacitive voltage divider comprises a series connection of a first capacitor (C1) and a second capacitor (C2);
- the voltage divider being electrically connected in parallel to the first switch (Q1) of the converter (2); and
- the sensing pin (P) being electrically connected to the node (N1) between the two capacitors (C1, C2) of the voltage divider;
- measuring via the sensing pin (P) the current (I_{Q1}) flowing through the first switch (Q1), when the first switch (Q1) is in the conducting state; and
- measuring via the sensing pin (P) the voltage (V₄) across the at least one light source (4); and
- detecting via the sensing pin (P) the point in time of the zero crossing of the current (I_{L1}) through the energy storage (L1), when the first switch (Q1) is in the non-conducting state, wherein the control unit (3) is configured for an over current monitoring via the sensing pin (P), wherein
- the operating device (1) comprises a diode (D1) electrically connected in parallel to the first capacitor (C1), such that the cathode of the diode (D1) is electrically connected with the node (N2) between the energy storage (L1) and the first switch (Q1) and the anode of the diode (D1) is electrically connected with the node (N1) between the two capacitors (C1, C2) of the voltage divider, wherein the method further comprises:
- providing a current flow (I) via the sensing pin (P) when the first switch (Q1) is in the conducting state, such that the diode (D1) is forward biased when the first switch (Q1) is in the conducting state, and
- providing no current flow via the sensing pin (P) when the first switch (Q1) is in the non-conducting state, such that the diode (D1) is reversed biased when the first switch (Q1) is in the non-conducting state.

## Patentansprüche

1. Betriebsvorrichtung (1) zum Versorgen mindestens einer Lichtquelle (4), vorzugsweise mindestens einer LED, mit elektrischer Energie,
- wobei die Betriebsvorrichtung (1) umfasst
- mindestens einen Eingangsanschluss (IN, IN') zum elektrischen Verbinden einer elektrischen Energiequelle (B1), vorzugsweise einer Batterie, die konfiguriert ist, um die Betriebsvorrichtung (1) mit elektrischer Energie zu versorgen;
- mindestens einen Ausgangsanschluss (OUT, OUT') zum elektrischen Verbinden der mindestens einen Lichtquelle (4) mit der Betriebsvorrichtung (1),
- mindestens einen aktiv geschalteten Wandler (2), vorzugsweise einen Aufwärts- oder einen Sperrwandler, der mit dem mindestens einen Eingangsanschluss (IN, IN') und dem mindestens einen Ausgangsanschluss (OUT, OUT') der Betriebsvorrichtung (1) elektrisch verbunden ist, und
- eine Steuereinheit (3), vorzugsweise eine ASIC;
- wobei der mindestens eine Wandler (2) einen ersten Schalter (Q1), vorzugsweise einen Transistor, und einen Energiespeicher (L1) umfasst, vorzugsweise eine Spule, die elektrisch in Reihe geschaltet sind; und
- wobei die Steuereinheit (3) konfiguriert ist, um das Schalten des ersten Schalters (Q1) zu steuern, um das Laden und Entladen des Energiespeichers (L1) und somit die bzw. den durch den Wandler (2) abgegebene Spannung, abgegebenen Strom und/oder elektrische Energie zu steuern; **dadurch gekennzeichnet, dass**
- die Steuereinheit (3) einen einzelnen Abtaststift (P) umfasst, der mit dem kapazitiven Nebenschlusswiderstand verbunden ist, d. h. indem er mit dem Mittelpunkt eines kapazitiven Spannungsteilers verbunden ist, wobei der kapazitive Spannungsteiler eine Reihenschaltung aus einem ersten Kondensator (C1) und einem zweiten Kondensator (C2) umfasst;
- wobei der Spannungsteiler elektrisch parallel zum ersten Schalter (Q1) des Wandlers (2) geschaltet ist; und
- wobei der Abtaststift (P) elektrisch mit dem Knoten (N1) zwischen den beiden Kondensatoren (C1, C2) des Spannungsteilers verbunden ist, wobei die Steuereinheit (3) konfiguriert ist, um über den Abtaststift (P) den Strom (I_{Q1}) zu messen, der durch den ersten Schalter (Q1) fließt, wenn sich der erste Schalter (Q1) im leitenden Zustand befindet; und
- die Steuereinheit (3) konfiguriert ist, um über den Abtaststift (P) die Spannung (V₄) an der mindestens einen Lichtquelle (4) zu messen und über den Abtaststift (P) den Zeitpunkt des Nulldurchgangs des Stroms (I_{L1}) durch den Energiespeicher (L1) zu erfassen, wenn sich der erste Schalter (Q1) im nichtleitenden Zustand befindet, wobei die Steuereinheit (3) für eine Überstromüberwachung über den Abtaststift (P) konfiguriert ist, wobei
- die Betriebsvorrichtung (1) eine Diode (D1) umfasst, die elektrisch parallel zum ersten Kondensator (C1) geschaltet ist, sodass die Kathode der Diode (D1) elektrisch mit dem Knoten (N2) zwischen dem Energiespeicher (L1) und dem ersten Schalter (Q1) verbunden ist und die Anode der Diode (D1) elektrisch mit dem Knoten (N1) zwischen den beiden Kondensatoren (C1, C2) des Spannungsteilers verbunden ist, wobei die Steuereinheit (3) eine Stromquelle (CS) umfasst, die konfiguriert ist, um:
- einen Stromfluss (I) über den Abtaststift (P) bereitzustellen, wenn sich der erste Schalter (Q1) im leitenden Zustand befindet, sodass die Diode (D1) in Durchlassrichtung vorgespannt ist, wenn sich der erste Schalter (Q1) im leitenden Zustand befindet, und
- keinen Stromfluss über den Abtaststift (P) bereitzustellen, wenn sich der erste Schalter (Q1) im nichtleitenden Zustand befindet, sodass die Diode (D1) in Sperrrichtung vorgespannt ist, wenn sich der erste Schalter (Q1) im nichtleitenden Zustand befindet.

2. Betriebsvorrichtung (1) nach einem der vorstehenden Ansprüche, wobei
- die Betriebsvorrichtung (1) einen zweiten Schalter (Q2) umfasst, vorzugsweise einen Transistor, der elektrisch parallel zum ersten Kondensator (C1) geschaltet ist, sodass eine Seite des zweiten Schalters mit dem Knoten (N2) zwischen dem Energiespeicher (L1) und dem ersten Schalter (Q1) elektrisch verbunden ist und die andere Seite des zweiten Schalters (Q2) mit dem Knoten (N1) zwischen den beiden Kondensatoren (C1, C2) des Spannungsteilers elektrisch verbunden ist, und
- die Steuereinheit (3) konfiguriert ist, um das Schalten des ersten Schalters (Q1) und des zweiten Schalters (Q2) gleichzeitig zu steuern.

3. Betriebsvorrichtung (1) nach Anspruch 8, wobei
- die Steuereinheit (3) konfiguriert ist, um über den Abtaststift (P) die Spannung über dem ersten Schalter (Q1) zu messen, wenn sich der erste Schalter (Q1) und der zweite Schalter (Q2) im leitenden Zustand befinden.

4. Betriebsvorrichtung (1) nach einem der vorstehenden Ansprüche, wobei
- die Steuereinheit (3) konfiguriert ist, um die über den Abtaststift (P) gemessene Spannung kurz vor dem, kurz nach dem oder zum selben Zeitpunkt zu speichern, zu dem die Steuereinheit (3) den ersten Schalter (Q1) zum Umschalten vom leitenden Zustand in den nichtleitenden Zustand steuert, und
- die Steuereinheit (3) konfiguriert ist, um auf der Grundlage der gespeicherten Spannung und der über den Abtaststift (P) gemessen Spannung, wenn sich der erste Schalter (Q1) im nichtleitenden Zustand befindet, die Spannung (V₄) über der mindestens einen Lichtquelle (4) zu bestimmen,
- vorzugsweise die Steuereinheit (3) eine Abtast- und Halteeinheit (S/H-Einheit) (S/H = sample and hold) umfasst, die konfiguriert ist, um die über den Abtaststift (P) gemessene Spannung kurz vor dem, kurz nach oder zum selben Zeitpunkt zu speichern, zu dem die Steuereinheit (3) den ersten Schalter (Q1) zum Umschalten vom leitenden Zustand in den nichtleitenden Zustand steuert.

5. Betriebsvorrichtung (1) nach einem der vorstehenden Ansprüche, wobei
- die Steuereinheit (3) konfiguriert ist, um über den Abtaststift (P) die Spannung über dem zweiten Kondensator (C2) zu messen, wenn sich der erste Schalter (Q1) im nichtleitenden Zustand befindet, und die über den Abtaststift (P) gemessene Spannung mit einem zweiten Spannungswert (Vzc) zu vergleichen,
- wobei vorzugsweise die Steuereinheit (3) einen zweiten Komparator (CP2) umfasst, der konfiguriert ist, um die über den Abtaststift (P) gemessene Spannung, wenn sich der erste Schalter (Q1) im nichtleitenden Zustand befindet, mit dem zweiten Spannungswert (Vzc) zu vergleichen.

6. Betriebsvorrichtung (1) nach Anspruch 10, wobei
- die Steuereinheit (3) konfiguriert ist, um den Zeitpunkt des Nulldurchgangs des Stroms (I_{L1}) zu erfassen, der durch den Energiespeicher (L1) fließt, wenn die über den Abtaststift (P) gemessene Spannung den zweiten Spannungswert (Vzc) erreicht.

7. Betriebsvorrichtung (1) nach Anspruch 10 oder 11, wobei
- die Steuereinheit (3) konfiguriert ist, um den ersten Schalter (Q1) zu steuern, um vom nichtleitenden Zustand in den leitenden Zustand zu schalten, wenn die über den Abtaststift (P) gemessene Spannung den zweiten Spannungswert (Vzc) erreicht.

8. Betriebsvorrichtung nach einem der vorstehenden Ansprüche, wobei die Steuereinheit auf der Grundlage des Signals am Abtaststift den ersten Schalter (S1), vorzugsweise prädiktiv, so steuert, dass der Strom durch den Energiespeicher (L1) im Wesentlichen konstant ist, vorzugsweise auch dann, wenn die Batteriespannung und/oder die Spannung über dem Leuchtmittel schwankt.

9. Lampe, umfassend
- mindestens eine Betriebsvorrichtung (1) nach einem der vorstehenden Ansprüche und
- mindestens eine Lichtquelle (4), vorzugsweise mindestens eine LED,
- wobei die mindestens eine Lichtquelle (4) mit dem mindestens einen Ausgangsanschluss (OUT, OUT') der Betriebsvorrichtung (1) elektrisch verbunden ist, und
- die Betriebsvorrichtung (1) konfiguriert ist, um die mindestens eine Lichtquelle (4) mit elektrischer Energie zu versorgen.

10. Verfahren zum Steuern einer Betriebsvorrichtung (1), vorzugsweise einer Betriebsvorrichtung nach einem der Ansprüche 1 bis 16, zum Versorgen mindestens einer Lichtquelle (4), vorzugsweise mindestens einer LED, mit elektrischer Energie,
- wobei die Betriebsvorrichtung (1) umfasst
- mindestens einen Eingangsanschluss (IN, IN') zum elektrischen Verbinden einer elektrischen Energiequelle (B1), vorzugsweise einer Batterie, die konfiguriert ist, um die Betriebsvorrichtung (1) mit elektrischer Energie zu versorgen;
- mindestens einen Ausgangsanschluss (OUT, OUT') zum elektrischen Verbinden der mindestens einen Lichtquelle (4) mit der Betriebsvorrichtung (1),
- mindestens einen Wandler (2), vorzugsweise einen Aufwärts- oder einen Sperrwandler, der mit dem mindestens einen Eingangsanschluss (IN, IN') und dem mindestens einen Ausgangsanschluss (OUT, OUT') der Betriebsvorrichtung (1) elektrisch verbunden ist, und
- eine Steuereinheit (3), vorzugsweise eine ASIC;
- wobei der mindestens eine Wandler (2) einen ersten Schalter (Q1), vorzugsweise einen Transistor, und einen Energiespeicher (L1) umfasst, vorzugsweise eine Spule, die elektrisch in Reihe geschaltet sind;
- wobei die Steuereinheit (3) das Schalten des ersten Schalters (Q1) steuert, um das Laden und Entladen des Energiespeichers (L1) und somit die bzw. den durch den Wandler (2) abgegebene Spannung, abgegebenen Strom und/oder elektrische Energie zu steuern;
**dadurch gekennzeichnet, dass** das Verfahren die Schritte umfasst:
- Verbinden eines einzelnen Abtaststifts (P) mit einem kapazitiven Nebenschlusswiderstand, d. h. indem er mit dem Mittelpunkt eines kapazitiven Spannungsteilers verbunden wird, wobei der kapazitive Spannungsteiler eine Reihenschaltung aus einem ersten Kondensator (C1) und einem zweiten Kondensator (C2) umfasst;
- wobei der Spannungsteiler elektrisch parallel zum ersten Schalter (Q1) des Wandlers (2) geschaltet ist; und
- der Abtaststift (P) mit dem Knoten (N1) zwischen den Kondensatoren (C1, C2) des Spannungsteilers elektrisch verbunden ist;
- Messen, über den Abtaststift (P), des Stroms (I_{Q1}), der durch den ersten Schalter (Q1) fließt, wenn sich der erste Schalter (Q1) im leitenden Zustand befindet; und
- Messen, über den Abtaststift (P), der Spannung (V₄) über der mindestens einen Lichtquelle (4); und
- Erfassen, über den Abtaststift (P), des Zeitpunkts des Nulldurchgangs des Stroms (I_{L1}) durch den Energiespeicher (L1), wenn sich der erste Schalter (Q1) im nichtleitenden Zustand befindet, wobei die Steuereinheit (3) für eine Überstromüberwachung über den Abtaststift (P) konfiguriert ist, wobei
- die Betriebsvorrichtung (1) eine erste Diode (D1) umfasst, die elektrisch parallel zum ersten Kondensator (C1) geschaltet ist, sodass die Kathode der Diode (D1) mit dem Knoten (N2) zwischen dem Energiespeicher (L1) und dem ersten Schalter (Q1) elektrisch verbunden ist und die Anode der Diode (D1) mit dem Knoten (N1) zwischen den zwei Kondensatoren (C1, C2) des Spannungsteilers elektrisch verbunden ist, wobei das Verfahren ferner umfasst:
- Bereitstellen eines Stromflusses (I) über den Abtaststift (P), wenn sich der erste Schalter (Q1) im leitenden Zustand befindet, sodass die Diode (D1) in Durchlassrichtung vorgespannt ist, wenn sich der erste Schalter (Q1) im leitenden Zustand befindet, und
- Bereitstellen keines Stromflusses über den Abtaststift (P), wenn sich der erste Schalter (Q1) im nichtleitenden Zustand befindet, sodass die Diode (D1) in Sperrrichtung vorgespannt ist, wenn sich der erste Schalter (Q1) im nichtleitenden Zustand befindet.

## Revendications

1. Dispositif d'exploitation (1) pour alimenter au moins une source de lumière (4), de préférence au moins une DEL, en énergie électrique,
- dans lequel le dispositif d'exploitation (1) comprend
- au moins une borne d'entrée (IN, IN') pour connecter électriquement une source d'énergie électrique (B1), de préférence une batterie, configurée pour alimenter de l'énergie électrique au dispositif d'exploitation (1) ;
- au moins une borne de sortie (OUT, OUT') pour connecter électriquement l'au moins une source de lumière (4) au dispositif d'exploitation (1),
- au moins un convertisseur activement commuté (2), de préférence un convertisseur élévateur ou un convertisseur à transfert indirect, électriquement connecté à l'au moins une borne d'entrée (IN, IN') et à l'au moins une borne de sortie (OUT, OUT') du dispositif d'exploitation (1), et
- une unité de commande (3), de préférence un ASIC ;
- dans lequel l'au moins un convertisseur (2) comprend un premier commutateur (Q1), de préférence un transistor, et un stockage d'énergie (L1), de préférence un inducteur, qui sont électriquement connectés en série ; et
- dans lequel l'unité de commande (3) est configurée pour commander la commutation du premier commutateur (Q1) afin de commander la charge et la décharge du stockage d'énergie (L1) et, ainsi, la tension, le courant et/ou l'énergie électrique délivrés en sortie par le convertisseur (2) ; **caractérisé en ce que**
- l'unité de commande (3) comprend une unique broche de détection (P) connectée à une dérivation capacitive, c'est-à-dire en la connectant au point médian d'un diviseur de tension capacitif, dans lequel le diviseur de tension capacitif comprend une connexion en série d'un premier condensateur (C1) et d'un deuxième condensateur (C2) ;
- le diviseur de tension étant électriquement connecté en parallèle au premier commutateur (Q1) du convertisseur (2) ; et
- la broche de détection (P) étant électriquement connectée au nœud (N1) entre les deux condensateurs (C1, C2) du diviseur de tension, dans lequel l'unité de commande (3) est configurée pour mesurer par l'intermédiaire de la broche de détection (P) le courant (I_{Q1}) circulant à travers le premier commutateur (Q1), lorsque le premier commutateur (Q1) est dans l'état conducteur ; et
- l'unité de commande (3) est configurée pour mesurer par l'intermédiaire de la broche de détection (P) la tension (V₄) à travers l'au moins une source de lumière (4) et pour détecter par l'intermédiaire de la broche de détection (P) le point dans le temps du passage par le point zéro du courant (I_{L1}) à travers le stockage d'énergie (L1), lorsque le premier commutateur (Q1) est dans l'état non conducteur, dans lequel l'unité de commande (3) est configurée pour une surveillance de surintensité par l'intermédiaire de la broche de détection (P), dans lequel
- le dispositif d'exploitation (1) comprend une diode (D1) électriquement connectée en parallèle au premier condensateur (C1), de telle sorte que la cathode de la diode (D1) est électriquement connectée avec le nœud (N2) entre le stockage d'énergie (L1) et le premier commutateur (Q1) et l'anode de la diode (D1) est électriquement connectée avec le nœud (N1) entre les deux condensateurs (C1, C2) du diviseur de tension, dans lequel l'unité de commande (3) comprend une source de courant (CS) configurée pour :
- fournir un passage de courant (I) par l'intermédiaire de la broche de détection (P) lorsque le premier commutateur (Q1) est dans l'état conducteur, de telle sorte que la diode (D1) est polarisée en sens direct lorsque le premier commutateur (Q1) est dans l'état conducteur, et
- pour ne fournir aucun passage de courant par l'intermédiaire de la broche de détection (P) lorsque le premier commutateur (Q1) est dans l'état non conducteur, de telle sorte que la diode (D1) est polarisée en sens inverse lorsque le premier commutateur (Q1) est dans l'état non conducteur.

2. Dispositif d'exploitation (1) selon l'une quelconque des revendications précédentes, dans lequel
- le dispositif d'exploitation (1) comprend un deuxième commutateur (Q2), de préférence un transistor, électriquement connecté en parallèle au premier condensateur (C1), de telle sorte qu'un côté du deuxième commutateur est électriquement connecté avec le nœud (N2) entre le stockage d'énergie (L1) et le premier commutateur (Q1) et l'autre côté du deuxième commutateur (Q2) est électriquement connecté avec le nœud (N1) entre les deux condensateurs (C1, C2) du diviseur de tension, et
- l'unité de commande (3) est configurée pour commander de façon synchrone la commutation du premier commutateur (Q1) et du deuxième commutateur (Q2).

3. Dispositif d'exploitation (1) selon la revendication 8, dans lequel
- l'unité de commande (3) est configurée pour mesurer par l'intermédiaire de la broche de détection (P) la tension à travers le premier commutateur (Q1) lorsque le premier commutateur (Q1) et le deuxième commutateur (Q2) sont dans l'état conducteur.

4. Dispositif d'exploitation (1) selon l'une quelconque des revendications précédentes, dans lequel
- l'unité de commande (3) est configurée pour stocker la tension mesurée par l'intermédiaire de la broche de détection (P) peu de temps avant, peu de temps après ou en même temps que l'unité de commande (3) commande le premier commutateur (Q1) pour commuter de l'état conducteur à l'état non conducteur, et
- l'unité de commande (3) est configurée pour déterminer sur la base de la tension stockée et de la tension mesurée par l'intermédiaire de la broche de détection (P) lorsque le premier commutateur (Q1) est dans l'état non conducteur la tension (V₄) à travers l'au moins une source de lumière (4),
- de préférence l'unité de commande (3) comprend une unité d'échantillonnage et de maintien (S/H) configurée pour stocker la tension mesurée par l'intermédiaire de la broche de détection (P) peu de temps avant, peu de temps après ou en même temps que l'unité de commande (3) commande le premier commutateur (Q1) pour commuter de l'état conducteur à l'état non conducteur.

5. Dispositif d'exploitation (1) selon l'une quelconque des revendications précédentes, dans lequel
- l'unité de commande (3) est configurée pour mesurer par l'intermédiaire de la broche de détection (P) la tension à travers le deuxième condensateur (C2) lorsque le premier commutateur (Q1) est dans l'état non conducteur et pour comparer la tension mesurée par l'intermédiaire de la broche de détection (P) à une deuxième valeur de tension (Vzc),
- de préférence l'unité de commande (3) comprend un deuxième comparateur (CP2) configuré pour comparer la tension mesurée par l'intermédiaire de la broche de détection (P) lorsque le premier commutateur (Q1) est dans l'état non conducteur à la deuxième valeur de tension (Vzc).

6. Dispositif d'exploitation (1) selon la revendication 10, dans lequel
- l'unité de commande (3) est configurée pour détecter le point dans le temps du passage par le point zéro du courant (I_{L1}) circulant à travers le stockage d'énergie (L1) lorsque la tension mesurée par l'intermédiaire de la broche de détection (P) atteint la deuxième valeur de tension (Vzc).

7. Dispositif d'exploitation (1) selon la revendication 10 ou 11, dans lequel
- l'unité de commande (3) est configurée pour commander le premier commutateur (Q1) pour commuter de l'état non conducteur à l'état conducteur, lorsque la tension mesurée par l'intermédiaire de la broche de détection (P) atteint la deuxième valeur de tension (Vzc).

8. Dispositif d'exploitation selon l'une quelconque des revendications précédentes, dans lequel, sur la base du signal au niveau de la broche de détection, l'unité de commande se charge de commander le premier commutateur (S1), de préférence d'une manière prédictive, de telle sorte que le courant à travers le stockage d'énergie (L1) est sensiblement constant, de préférence même si la tension de batterie et/ou la tension à travers le moyen d'éclairage sont en train de fluctuer.

9. Lampe comprenant
- au moins un dispositif d'exploitation (1) selon l'une quelconque des revendications précédentes, et
- au moins une source de lumière (4), de préférence au moins une DEL,
- dans laquelle l'au moins une source de lumière (4) est électriquement connectée à l'au moins une borne de sortie (OUT, OUT') du dispositif d'exploitation (1), et
- le dispositif d'exploitation (1) est configuré pour alimenter l'au moins une source de lumière (4) en énergie électrique.

10. Procédé de commande d'un dispositif d'exploitation (1), de préférence un dispositif d'exploitation selon l'une quelconque des revendications 1 à 16, pour alimenter au moins une source de lumière (4), de préférence au moins une DEL, en énergie électrique,
- dans lequel le dispositif d'exploitation (1) comprend
- au moins une borne d'entrée (IN, IN') pour connecter électriquement une source d'énergie électrique (B1), de préférence une batterie, configurée pour alimenter de l'énergie électrique au dispositif d'exploitation (1) ;
- au moins une borne de sortie (OUT, OUT') pour connecter électriquement l'au moins une source de lumière (4) au dispositif d'exploitation (1),
- au moins un convertisseur (2), de préférence un convertisseur élévateur ou un convertisseur à transfert indirect, électriquement connecté à l'au moins une borne d'entrée (IN, IN') et à l'au moins une borne de sortie (OUT, OUT') du dispositif d'exploitation (1), et
- une unité de commande (3), de préférence un ASIC ;
- dans lequel l'au moins un convertisseur (2) comprend un premier commutateur (Q1), de préférence un transistor, et un stockage d'énergie (L1), de préférence un inducteur, qui sont électriquement connectés en série ;
- dans lequel l'unité de commande (3) commande la commutation du premier commutateur (Q1) afin de commander la charge et la décharge du stockage d'énergie (L1) et, ainsi, la tension, le courant et/ou l'énergie électrique délivrés en sortie par le convertisseur (2) ;
**caractérisé en ce que** le procédé comprend les étapes consistant à :
- connecter une unique broche de détection (P) à une dérivation capacitive c'est-à-dire en la connectant au point médian d'un diviseur de tension capacitif, dans lequel le diviseur de tension capacitif comprend une connexion en série d'un premier condensateur (C1) et d'un deuxième condensateur (C2) ;
- le diviseur de tension étant électriquement connecté en parallèle au premier commutateur (Q1) du convertisseur (2) ; et
- la broche de détection (P) étant électriquement connectée au nœud (N1) entre les deux condensateurs (C1, C2) du diviseur de tension ;
- mesurer par l'intermédiaire de la broche de détection (P) le courant (I_{Q1}) circulant à travers le premier commutateur (Q1), lorsque le premier commutateur (Q1) est dans l'état conducteur ; et
- mesurer par l'intermédiaire de la broche de détection (P) la tension (V₄) à travers l'au moins une source de lumière (4) ; et
- détecter par l'intermédiaire de la broche de détection (P) le point dans le temps du passage par le point zéro du courant (I_{L1}) à travers le stockage d'énergie (L1), lorsque le premier commutateur (Q1) est dans l'état non conducteur, dans lequel l'unité de commande (3) est configurée pour une surveillance de surintensité par l'intermédiaire de la broche de détection (P), dans lequel
- le dispositif d'exploitation (1) comprend une diode (D1) électriquement connectée en parallèle au premier condensateur (C1), de telle sorte que la cathode de la diode (D1) est électriquement connectée avec le nœud (N2) entre le stockage d'énergie (L1) et le premier commutateur (Q1) et l'anode de la diode (D1) est électriquement connectée avec le nœud (N1) entre les deux condensateurs (C1, C2) du diviseur de tension, dans lequel le procédé comprend en outre :
- la fourniture d'un passage de courant (I) par l'intermédiaire de la broche de détection (P) lorsque le premier commutateur (Q1) est dans l'état conducteur, de telle sorte que la diode (D1) est polarisée en sens direct lorsque le premier commutateur (Q1) est dans l'état conducteur, et
- l'absence de fourniture d'un passage de courant par l'intermédiaire de la broche de détection (P) lorsque le premier commutateur (Q1) est dans l'état non conducteur, de telle sorte que la diode (D1) est polarisée en sens inverse lorsque le premier commutateur (Q1) est dans l'état non conducteur.
